# EUROPÄISCHE PATENTSCHRIFT

(11) **EP 3 935 571 B1**
(45) Veröffentlichungstag und Bekanntmachung des Hinweises auf die Patenterteilung: **24.01.2024**
(21) Anmeldenummer: 20716167.0
(22) Anmeldetag: 06.03.2020
(51) Int. Cl.: G06K 19/07, G06K 19/077

(54) **RFID-TRANSPONDER UND TRAGBARER DATENTRÄGER**
RFID TRANSPONDER AND PORTABLE DATA CARRIER
TRANSPONDEUR RFID ET SUPPORT DE DONNÉES PORTATIF

(30) Priorität: 06.03.2019 DE 102019105636
(43) Veröffentlichungstag der Anmeldung: 12.01.2022
(73) Patentinhaber: Bundesdruckerei GmbH, 10969 Berlin (DE)
(72) Erfinder: TIETKE, Markus, 12439 Berlin (DE); KRAUS, Micha, 10827 Berlin (DE); TRÖLENBERG, Stefan, 15749 Mittenwalde, OT Ragow (DE); FISCHER, Jörg, 10317 Berlin (DE); BASTIAN, Paul, 10243 Berlin (DE)
(74) Vertreter: Bittner, Thomas L.
(86) Internationale Anmeldenummer: PCT/DE2020/100153
(87) Internationale Veröffentlichungsnummer: WO 2020/177816

(56) Entgegenhaltungen:
- DE-A1-102015 012 617
- US-A1- 2006 049 263

## Beschreibung

Die Erfindung betrifft einen RFID-Transponder sowie einen tragbaren Datenträger.

### Hintergrund

In Verbindung mit RFID-Transpondern (RFID, Radio Frequency identification) können generell zwei Arten unterschieden werden: aktive Transponder und passive Transponder. Aktive Transponder besitzen eine eigene Energieversorgung, beispielsweise mittels einer Batterie. Passive Transponder beziehen die zum Betrieb notwendige Energie aus einem von einem externen Gerät, insbesondere einem Lesegerät, erzeugten Feld. Energie und Daten werden kontaktlos übertragen. Je nach RFID-Technologie kann dies mittels einer magnetischen Antenne (RFID-Systeme bis 13,56 MHz) oder einer elektromagnetischen Antenne (RFID-Systeme ab 433 MHz) erfolgen. Passive RFID-Transponder sind insoweit ohne das äußere Feld, welches von dem externen Gerät bereitgestellt wird, also funktionsunfähig. Eine große Auswahl an Transponderchip-Typen sind für folgende RFID-Technologien verfügbar: niederfrequente Energie- / Datenübertragung - LF, 125 bis 135 kHz; hochfrequente Energie- / Datenübertragung - HF, 13.56 MHz und ultrahochfrequente (UHF) Energie- / Datenübertragung - UHF, 850 bis 950 MHz.

Zur Spannungsbegrenzung beim Überschreiten eines Grenzwertes wurde im Dokument EP 0 945 829 A2 für eine Anordnung mit Antennenschwingkreis und Transponder vorgeschlagen, einem Schwingkreiselement des Antennenschwingkreises eine Anordnung von Zener-Dioden parallel zu schalten. Das Dokument US 2017/0231043 A1 offenbart ein Verfahren zur Begrenzung einer Spannung in Sperrichtung einer Leuchtdiode, die sich auf einem sicheren Element befindet.

Die RFID-Transponder verfügen über eine Antenneneinrichtung, über die sowohl die Energieversorgung des Transponders als auch der Datenaustausch zwischen dem Transponder und dem externen Gerät stattfindet.

Zur einfachen und schnellen kontaktlosen Kommunikation zwischen zwei Geräten wurde eine induktive Übertragungstechnik entwickelt, welche als sogenannte Nahfeldkommunikation (NFC, Near Field Communication) bekannt ist. Die Kopplung der beiden Geräte, von denen eines zum Beispiel ein RFID-Transponder ist, findet über Spulen statt, wobei die Trägerfrequenz wie in RFID-Systemen 13,56 MHz beträgt.

Es sind multifunktionale RFID-Transponder bekannt, beispielsweise in Form kontaktloser Chipkarten, bei denen mit dem Mikrocontroller, welcher mit Prozessor und Speichereinrichtung gebildet und eingerichtet ist, über die Antenneneinrichtung empfangene Daten zu speichern, Zusatz-Funktionskomponenten verbunden sind. Der Betrieb der Zusatz-Funktionskomponente(n), beispielsweise eine lichtemittierende Diode und / oder ein Lautsprecher, wird mittels des Mikrocontrollers gesteuert. Mithilfe der Zusatz-Funktionskomponente kann zum Beispiel einem Nutzer eine Rückmeldung gegeben werden, sei es in Form eines optischen und / oder eines akustischen Signals. Im Betrieb können bei diesem RFID-Transponder Probleme auftreten, wenn eine oder mehrere der Zusatz-Funktionskomponenten von dem Mikrocontroller angesteuert werden, derart, dass dann die in dem RFID-Transponder bereitgestellte Versorgungsspannung zusammenbricht, worauf es zu Fehlfunktionen des Mikrocontroller kommen kann.

In dem Dokument US 2018/0277241 A1 ist ein System zur drahtlosen Kommunikation zwischen einer Blutentnahme-Einrichtung und einem Blutbehälter offenbart. Ein RFID-Tag an dem Blutbehälter ist eingerichtet, Informationen im Zusammenhang mit dem Blutentnahme-Vorgang zu speichern und kann passiv, semi-passiv oder aktiv bereitgestellt und für die Kommunikation mit externen Einrichtungen eingerichtet sein.

Das Dokument US 2008/0155258 A1 beschreibt eine Architektur für die Verwaltung von Nahfeld-Transkaktionen in einer Speichereinheit mit Sicherheitsfunktionen und NFC-Funktionen.

Das Dokument US 2010/0109553 A1 betrifft eine lichtemittierende Diode (LED) mit einer Zener-Diode, einer Zener-Dioden-Anordnung oder einem Widerstand in Reihenschaltung.

In dem Dokument US 2006 / 049263 A1 ist eine Chipkarte mit Anzeigefeld aber ohne Batterien beschrieben, die eine kontaktbehaftete/kontaktlose Kommunikationsschnittstelle, einen Mikroprozessor, ein EEPROM, einen Gleichrichter / Spannungsregler, einen Anzeigetreiber, eine darin angeordneten Ladungspumpe und eine darauf angeordnete Anzeigetafel umfasst.

Das Dokument DE 10 2015 012 617 A1 offenbart ein Verfahren zur Begrenzung einer Spannung in Sperrrichtung einer Leuchtdiode, die sich auf einem sicheren Element befindet. Die Leuchtdiode ist elektrisch parallel mit einer Spule und mit Betriebsspannungsanschlüssen einer integrierten Schaltung verbunden, wobei die Spule sowohl zur Energieversorgung der integrierten Schaltung und der Leuchtdiode dient, indem mittels eines elektromagnetischen Feldes, welches durch ein externes Terminal erzeugt wird, in der Spule eine elektrische Spannung induziert wird, als auch zur kontaktlosen Datenübertragung zwischen der integrierten Schaltung und dem Terminal dient. Die integrierte Schaltung dient zur Verarbeitung von Daten, welche zwischen dem Terminal und der integrierten Schaltung übertragen werden. Ein Shunt-Regler regelt die für den Betrieb der integrierten Schaltung notwendige Betriebsspannung auf einen Wert innerhalb eines zulässigen Bereichs und begrenzt diese dadurch, so dass eine maximal erlaubte Spannung in Sperrrichtung der Leuchtdiode nicht überschritten wird.

### Zusammenfassung

Aufgabe der Erfindung ist es, einen RFID-Transponder sowie einen tragbaren Datenträger anzugeben, bei denen die Versorgung mit der betriebsnotwendigen Spannung verbessert ist.

Zur Lösung sind ein RFID-Transponder sowie ein tragbarer Datenträger nach den unabhängigen Ansprüchen 1 und 5 geschaffen. Ausgestaltungen sind Gegenstand von abhängigen Unteransprüchen.

Nach einem Aspekt ist ein RFID-Transponder geschaffen. Es ist Folgendes vorgesehen: eine Antenneneinrichtung; ein Gleichrichter; ein Mikrocontroller, der einen Prozessor und eine Speichereinrichtung aufweist, die eingerichtet ist, über die Antenneneinrichtung empfangene Daten zu speichern, und der zum Empfangen einer Mikrocontroller-Betriebsspannung über eine Spannungsregeleinrichtung mit dem Gleichrichter verbunden ist; mindestens eine Zusatz-Funktionskomponente, die mit dem Mikrocontroller verbunden ist und deren Betrieb mittels des Mikrocontrollers gesteuert wird; und eine Zener-Diode (Z-Diode), welche zwischen die Spannungsregeleinrichtung und einen Versorgungsanschluss der mindestens einen Zusatz-Funktionskomponente und in Sperrrichtung in Reihe zu der mindestens einen Zusatz-Funktionskomponente geschaltet ist.

Nach einem weiteren Aspekt ist ein tragbarer Datenträger mit einem solchen RFID-Transponder geschaffen.

Beim RFID-Transponder kann einen Transponderkörper vorgesehen sein, an oder auf welchem die Komponenten angeordnet sind, insbesondere die Antenneneinrichtung, der Gleichrichter, der Mikrocontroller, die mindestens eine Zusatz-Funktionskomponente sowie die Z-Diode.

Der RFID-Transponder kann für eine kontaktlose Übertragung von Energie und Daten eingerichtet sein.

Der RFID-Transponder kann ein passiver RFID-Transponder sein, welcher seine zum Betrieb notwendige Energie von extern empfängt. Der RFID-Transponder kann wegen der mindestens einen Zusatz-Funktionskomponente als multifunktionaler (passiver) RFID-Transponder bezeichnet werden.

Mithilfe der Z-Diode, welche zum Beispiel zur Spannungsregeleinrichtung parallel geschaltet sein kann, wird sichergestellt, dass auch bei dem Betrieb der mindestens einen Zusatz-Funktionskomponente am Mikrocontroller die für den Betrieb notwendige Mikrocontroller-Betriebsspannung anliegt. Ein Zusammenbruch oder ein Ausfall des Mikrocontrollers aufgrund des Betriebs der mindestens einen Zusatz-Funktionskomponente ist verhindert.

Es kann vorgesehen sein, dass über der Z-Diode mindestens die Mikrocontroller-Betriebsspannung minus eine Versorgungsspannung der mindestens einen Zusatz-Funktionskomponente abfällt, damit diese den Strom für die mindestens eine Zusatz-Funktionskomponente durchlässt.

Die Formulierung "Z-Diode" in der hier verwendeten Bedeutung bezieht sich auf ein Schaltungselement, welches die übliche Funktionalität einer Zener-Diode (Z-Diode) bereitstellt, sei es mithilfe eines einzigen Bauelements, insbesondere einer Diode, oder einer Anordnung von elektronischen Bauelementen, die als Gesamtheit die Funktionalität der Z-Diode implementieren.

Eine Z-Diode ist eine Diode, die darauf ausgelegt ist, dauerhaft in Sperrrichtung im Bereich der Durchbruchspannung (Z-Spannung) betrieben zu werden. Die Höhe dieser Durchbruchspannung ist die Hauptkenngröße einer Z-Diode und ist im zugehörigen Datenblatt spezifiziert. Erreicht wird das üblicherweise mittels einer Kombination einer p-dotierten Schicht (p⁺-Schicht) und einer n-dotierten Schicht (n⁻-Schicht). Die starke Rekombination beider Schichten führt zu einer sehr geringen Sperrschichtdicke und damit zu hohen Feldstärken im Bereich der Sperrschicht.

Die Antenneneinrichtung kann in einer Ausführung einen Schwingkreis aufweisen.

Der Gleichrichter kann eingerichtet sein, eine von der Antenneneinrichtung auf das kontaktlose Empfangen von Energie bereitgestellte Spannung gleichzurichten.

Bei dem RFID-Transponder kann eine weitere Zusatz-Funktionskomponente vorgesehen sein, die mit dem Mikrocontroller verbunden ist und deren Betrieb mittels des Mikrocontrollers gesteuert wird, wobei die Z-Diode zwischen die Spannungsregeleinrichtung und einen Versorgungsanschluss der weiteren Zusatz-Funktionskomponente und in Sperrrichtung in Reihe zu der mindestens einen weiteren Zusatz-Funktionskomponente geschaltet ist. Die (mindestens eine) weitere Zusatz-Funktionskomponente kann zur mindestens einen Zusatz-Funktionskomponente parallel geschaltet sein.

Der Mikrocontroller ist regelmäßig mittels eines integrierten Chips bereitgestellt.

Die mindestens eine Zusatz-Funktionskomponente und / oder die weitere Zusatz-Funktionskomponente können mit einem Bauteil aus der folgenden Gruppe gebildet sein: lichtemittierende Diode, Schallwandler wie Lautsprecher, NFC-Transceiver und Bluetooth-Transceiver. Eine Kombination unterschiedlicher Bauelemente kann vorgesehen sein.

Die Z-Diode ist zwischen eine Eingangsseite der Spannungsregeleinrichtung und den Versorgungsanschluss der mindestens einen Zusatz-Funktionskomponente geschaltet. Hierbei ist die Z-Diode mit einer Seite zwischen der Spannungsregeleinrichtung und dem Gleichrichter angeschlossen. Die Z-Diode kann parallel zu der Spannungsregeleinrichtung geschaltet sein.

Die Z-Diode kann zwischen eine Ausgangsseite der Spannungsregeleinrichtung (9) und den Versorgungsanschluss der mindestens einen Zusatz-Funktionskomponente (3.1, 3.2, 3.3) geschaltet sein. Hierbei kann die Z-Diode mit einer Seite zwischen der Spannungsregeleinrichtung und dem Mikrocontroller angeschlossen sein. Die Z-Diode kann in Reihe zu der Spannungsregeleinrichtung geschaltet sein.

Bei dem RFID-Transponder kann die Z-Diode eine Durchbruchspannung aufweisen, welche wenigstens einer minimalen Betriebsspannung des Mikrocontrollers minus einer Versorgungsspannung der mindestens einen Zusatz-Funktionskomponente entspricht. Alternativ kann die Z-Diode eine Durchbruchspannung aufweisen, welche wenigstens einer minimalen Betriebsspannung des Mikrocontrollers plus einer Versorgungsspannung der mindestens einen Zusatz-Funktionskomponente entspricht. Als weitere Alternative kann die Z-Diode eine Durchbruchspannung aufweisen, welche einer minimalen Betriebsspannung des Mikrocontrollers entspricht.

Bei dem tragbaren Datenträger kann es sich um einen Datenträger aus der folgenden Gruppe handeln: kontaktlose Chipkarte, Wert- oder Sicherheitsdokument wie Identitätsdokument oder Ausweisdokument. Chipkarten mit einem Prozessor werden auch als Prozessorkarten bezeichnet. Eine kontaktlose Chipkarte, welche eingerichtet sein kann für eine ISO 14443 (beispielsweise in der Version vom April 2018) konforme Kommunikation, kann ergänzend über Kontakte verfügen, die insbesondere ein Ein- und Auslesen von Daten mittels kontaktbehafteter Übertragung ermöglichen, zum Beispiel konform mit ISO 7816 (beispielsweise in der 2017 aktualisierten Version).

Ein Wert- oder Sicherheitsdokument kann beispielsweise Folgendes sein: ein Reisepass, Personalausweis, Führerschein, ein Zugangskontrollausweis oder eine anderes Identitätsdokument, eine Passdatenseite, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, Jeton oder ein anderes Dokument. Das Wert- oder Sicherheitsprodukt kann beispielsweise eine Smartcard sein. Das Wert- oder Sicherheitsdokument kann im ID 1-, ID 2-, ID 3- oder in irgendeinem anderen normierten oder nicht normierten Format, beispielsweise in Heftform, wie bei einem passähnlichen Gegenstand, vorliegen. Vorzugsweise liegt das Wert- oder Sicherheitsdokument in Kartenform vor.

Ein Wert- oder Sicherheitsprodukt kann im Allgemeinen ein Laminat aus mehreren Dokumentenlagen sein, die passgenau unter Wärmeeinwirkung und unter erhöhtem Druck flächig miteinander verbunden sind. Diese Produkte sollen den normierten Anforderungen genügen, beispielsweise gemäß ISO 10373 (insbesondere in der Version von 2014), ISO / IEC 7810 (insbesondere in der Version von 2003), ISO 14443 (insbesondere in der Version von 2018).

Die Dokumentenlagen bestehen beispielsweise aus einem Trägermaterial, das sich für eine Lamination eignet. Dieses Trägermaterial kann durch ein oder mehrere Polymere gebildet sein, die ausgewählt sind aus der folgenden Gruppe: Polycarbonat (PC), insbesondere Bisphenol A-Polycarbonat, Polyethylenterephthalat (PET), deren Derivate, wie Glykolmodifiziertes PET (PETG), Polyethylennaphthalat (PEN), Polyvinylchlorid (PVC), Polyvinylbutyral (PVB), Polymethylmethacrylat (PMMA), Polyimid (PI),Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, oder Papier oder Pappe oder Glas oder Metall oder Keramik. Bevorzugt besteht das Wert- oder Sicherheitsdokument aus Polycarbonat und zwar besonders bevorzugt aus Polycarbonat auf Basis von Bisphenol A oder aus PC / TPU / PC. Die Polymere können entweder gefüllt oder ungefüllt vorliegen. Im letzteren Falle sind sie vorzugsweise transparent oder transluzent. Falls die Polymere gefüllt sind, sind sie opak. Bevorzugt wird das Produkt aus 3 bis 12 Folien, vorzugsweise 4 bis 10 Folien, hergestellt.

Die Z-Spannung der verendeten Z-Diode kann in Abhängigkeit von der minimalen Betriebsspannung des Mikrocontrollers minus der Versorgungsspannung, insbesondere der maximalen Versorgungsspannung der mindestens einen Zusatz-Funktionskomponente, ausgewählt werden. Alternativ kann die Z-Spannung der verendeten Z-Diode in Abhängigkeit von der minimalen Betriebsspannung des Mikrocontrollers plus der Versorgungsspannung, insbesondere der maximalen Versorgungsspannung der mindestens einen Zusatz-Funktionskomponente, ausgewählt werden. Sie kann mindestens der Betriebsspannung des Mikrocontrollers entsprechen. Beträgt diese beispielsweise 1.8V, so kann eine Z-Diode mit einer Z- Spannung von mindestens 1.8V gewählt werden, alternativ mit einer Z-Spannung von wenigstens 2.4V.

In einem Beispiel kann vorgesehen sein, dass eine Kathode der Z-Diode zwischen der Spannungsregeleinrichtung und dem Mikrocontroller angeschlossen ist, wobei ihre Anode an die Zusatz-Funktionskomponente(n) angeschlossen ist. Die Spannungsregeleinrichtung kann eine unabhängige und höhere Ausgangsspannung als Eingangsspannung erzeugen. In dieser Anordnung kann die Durchbruchspannung der Z-Diode unabhängig von der minimalen Versorgungsspannung des Mikrocontrollers gewählt werden. In einem solchen Fall kann vorgesehen sein, die Z-Diode so zu wählen, dass die Zusatz-Funktionskomponente(n) abgeschaltet werden, wenn ein Pufferkondensators einen so niedrigen Energievorrat (=niedrige Spannung) speichert, dass der Mikrocontroller nur noch für eine bestimmte minimale Betriebszeit versorgt werden kann.

### Beschreibung von Ausführunqsbeispielen

Im Folgenden werden weitere Ausführungsbeispiele unter Bezugnahme auf eine Figur näher erläutert.

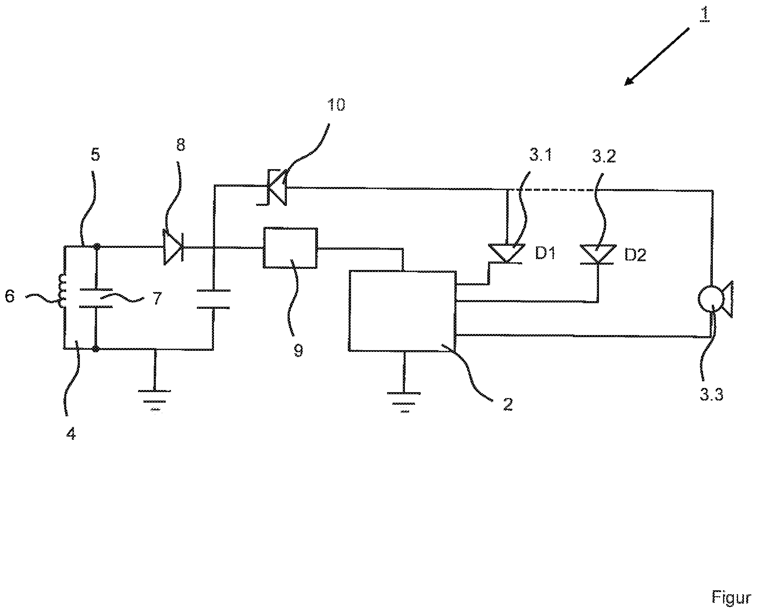

Die einzige Figur zeigt ein Beispiel für ein Schaltungsbild für einen passiven RFID-Transponder 1, welcher seine zum Betrieb notwendige Energie von extern empfängt und bei dem ein Mikrocontroller 2 ergänzend externe Zusatz-Funktionskomponenten 3.1, 3.2, 3.3 steuert, insbesondere ein- und ausschaltet. Bei den Zusatz-Funktionskomponenten 3.1, 3.2, 3.3 handelt es sich bei dem gezeigten Beispiel um lichtemittierende Dioden D1 und D2 sowie einen Lautsprecher. Mithilfe der Zusatz-Funktionskomponenten 3.1, 3.2, 3.3 können einem Benutzer mittels Ausgeben optischer und / oder akustischer Signale Informationen mitgeteilt werden.

Bei dem RFID-Transponder 1 umfasst im gezeigten Ausführungsbeispiel eine Antenneneinrichtung 4 einen Schwingkreis 5 mit einer Antennenschleife 6 und einem Kondensator 7. Mithilfe der Antenneneinrichtung 4 ist der RFID-Transponder 1 in der Lage, kontaktlos Energie und Daten von einem externen Gerät zu empfangen, beispielsweise einem RFID-Schreib-Lesegerät. Hierzu wird eine Feldkopplung zur Antenne des externen Geräts ausgebildet. Die empfangene Energie wird in eine Eingangsspannung umgewandelt, welche mithilfe eines Gleichrichters 8 gleichgerichtet wird. An den Gleichrichter 8 sind parallel eine Spannungsregeleinrichtung 9 sowie eine Z-Diode 10 angeschlossen, welche mit den Zusatz-Funktionskomponenten 3.1, 3.2, 3.3 in Reihe geschaltet ist. Die Zusatz-Funktionskomponenten 3.1, 3.2, 3.3 sind im gezeigten Beispiel ihrerseits zueinander parallel geschaltet und mit Steueranschlüssen des Mikrocontrollers 2 verbunden.

Die Z-Diode 10 kann alternativ auch ihre Kathode zwischen der Spannungsregeleinrichtung 9 und dem Mikrocontroller 2 angeschlossen haben und ihre Anode an die Zusatz-Funktionskomponente(n) 3.1, 3.2, 3.3. Gemäß der Figur erhalten die Zusatz-Funktionskomponenten 3.1, 3.2, 3.3 eine nicht stabilisierte Spannung des Pufferkondensators als Versorgungsspannung. Die Spannungsregeleinrichtung 9 kann eine unabhängige und höhere Ausgangsspannung als Eingangsspannung erzeugen. In dieser Anordnung wäre die Durchbruchspannung der Z-Diode 10 unabhängig von der minimalen Versorgungsspannung des Mikrocontrollers 2 zu wählen, da diese Größen nicht mehr direkt miteinander verbunden sind. In einem solchen Fall kann vorgesehen sein, die Z-Diode 10 so zu wählen, dass die Zusatz-Funktionskomponente(n) 3.1, 3.2, 3.3 abgeschaltet werden, wenn der Pufferkondensators einen so niedrigen Energievorrat (=niedrige Spannung) speichert, dass der Mikrocontroller 2 nur noch für eine bestimmte minimale Betriebszeit versorgt werden kann.

Der Mikrocontroller 2 umfasst wenigstens einen Prozessor und eine Speichereinrichtung, um empfangene Daten zumindest zu speichern.

Mithilfe der Zusatz-Funktionskomponenten 3.1, 3.2, 3.3 ist ein multifunktionaler RFID-Transponder geschaffen bei dem zusätzlich zum üblichen Datenaustausch eine Rückkopplung oder Rückmeldung an den Benutzer ermöglicht ist. Der multifunktionale RFID-Transponder 1 kann in einen tragbaren Datenträger integriert werden, beispielsweise eine kontaktlose Chipkarte.

In einem Beispiel können die Zusatz-Funktionskomponenten 3.1, 3.2, 3.3 über einen oder mehrere Transistoren (nicht dargestellt) an den Mikrocontroller 2 koppeln, wobei der oder die Transistoren nutzbar sind, um die Zusatz-Funktionskomponenten 3.1, 3.2, 3.3 zu schalten. Als Transistor kann ein NPN-Transistor oder ein N-Kanal Mosfet zum Einsatz kommen.

Die in der vorstehenden Beschreibung, den Ansprüchen sowie der Figur offenbarten Merkmale können sowohl einzeln als auch in beliebiger Kombination für die Verwirklichung der verschiedenen Ausführungen von Bedeutung sein.

## Patentansprüche

1. RFID-Transponder, mit:
- einer Antenneneinrichtung (4);
- einem Gleichrichter (8);
- einem Mikrocontroller (2), der einen Prozessor und eine Speichereinrichtung aufweist, die eingerichtet ist, über die Antenneneinrichtung (4) empfangene Daten zu speichern, und der zum Empfangen einer Mikrocontroller-Betriebsspannung über eine Spannungsregeleinrichtung (9) mit dem Gleichrichter verbunden ist; und
- mindestens einer Zusatz-Funktionskomponente (3.1, 3.2, 3.3), die mit dem Mikrocontroller (2) verbunden ist und deren Betrieb mittels des Mikrocontrollers (2) gesteuert wird;
**gekennzeichnet durch** eine Z-Diode (10), welche zwischen eine Eingangsseite der Spannungsregeleinrichtung (9) und einen Versorgungsanschluss der mindestens einen Zusatz-Funktionskomponente (3.1, 3.2, 3.3) geschaltet ist, derart, dass die Z-Diode mit einer Seite zwischen der Spannungsregeleinrichtung und dem Gleichrichter angeschlossen ist, und in Sperrrichtung in Reihe zu der mindestens einen Zusatz-Funktionskomponente (3.1, 3.2, 3.3) geschaltet ist.

2. RFID-Transponder nach Anspruch 1, **dadurch gekennzeichnet, dass** eine weitere Zusatz-Funktionskomponente (3.1, 3.2, 3.3) vorgesehen ist, die mit dem Mikrocontroller (2) verbunden ist und deren Betrieb mittels des Mikrocontrollers (2) gesteuert wird, wobei die Z-Diode (10) zwischen die Spannungsregeleinrichtung (9) und einen Versorgungsanschluss der weiteren Zusatz-Funktionskomponente (3.1, 3.2, 3.3) und in Sperrrichtung in Reihe zu der weiteren Zusatz-Funktionskomponente (3.1, 3.2, 3.3) geschaltet ist.

3. RFID-Transponder nach Anspruch 1 oder 2, **dadurch gekennzeichnet, dass** die mindestens eine Zusatz-Funktionskomponente (3.1, 3.2, 3.3) und / oder die weitere Zusatz-Funktionskomponente (3.1, 3.2, 3.3) mit einem Bauteil aus der folgenden Gruppe gebildet sind: lichtemittierende Diode, Schallwandler, NFC-Transceiver und Bluetooth-Transceiver.

4. RFID-Transponder nach mindestens einem der vorangehenden Ansprüche, **dadurch gekennzeichnet, dass** die Z-Diode (10) eine Durchbruchspannung aufweist, welche wenigstens einer minimalen Betriebsspannung des Mikrocontrollers (2) minus einer Versorgungsspannung der mindestens einen Zusatz-Funktionskomponente (3.1, 3.2, 3.3) entspricht.

5. Tragbarer Datenträger mit einem RFID-Transponder nach mindestens einem der vorangehenden Ansprüche.

6. Tragbarer Datenträger nach Anspruch 5, ausgewählt aus der folgenden Gruppe von Datenträgern: kontaktlose Chipkarte, Wert- oder Sicherheitsdokument wie Identitätsdokument oder Ausweisdokument.

## Claims

1. An RFID transponder comprising:
- an antenna device (4);
- a rectifier (8);
- a microcontroller (2) which has a processor and a storage device that is configured to store data received via the antenna device (4) and is connected to the rectifier via a voltage control device (9) to receive a microcontroller operating voltage; and
- at least one additional functional component (3.1, 3.2, 3.3) that is connected to the microcontroller (2) and the operation of which is controlled by means of the microcontroller (2);
**characterized by** a Zener diode (10) which is connected between an input side of the voltage control device (9) and a supply terminal of the at least one additional functional component (3.1, 3.2, 3.3), in such a manner that the Zener diode is connected with one side between the voltage control device and the rectifier and is connected, in the reverse direction, in series to the at least one additional functional component (3.1, 3.2, 3.3).

2. The RFID transponder according to claim 1, **characterized in that** a further additional functional component (3.1, 3.2, 3.3) is provided, which is connected to the microcontroller (2) and the operation of which is controlled by means of the microcontroller (2), wherein the Zener diode (10) is connected between the voltage control device (9) and a supply terminal of the further additional functional component (3.1, 3.2, 3.3) and is connected. in the reverse direction, in series to the further additional functional component (3.1, 3.2, 3.3).

3. The RFID transponder according to claim 1 or 2, **characterized in that** the at least one additional functional component (3.1, 3.2, 3.3) and/or the further additional functional component (3.1, 3.2, 3.3) are formed with a component from the following group: light-emitting diode, sound transducer, NFC transceiver, and Bluetooth transceiver.

4. The RFID transponder according to at least one of the preceding claims, **characterized in that** the Zener diode (10) has a breakdown voltage that corresponds to at least a minimum operating voltage of the microcontroller (2) minus a supply voltage of the at least one additional functional component (3.1, 3.2, 3.3).

5. A portable data carrier with an RFID transponder according to at least one of the preceding claims.

6. The portable data carrier according to claim 5, chosen from the following group of data carriers: contactless smart card, value or security document such as identity document or identification document.

## Revendications

1. Transpondeur RFID, comportant :
- un dispositif d'antenne (4) ;
- un redresseur (8) ;
- un microcontrôleur (2), qui possède un processeur et un dispositif de mémoire qui est configuré pour mémoriser les données reçues via le dispositif d'antenne (4), et qui est connecté au redresseur via un dispositif de régulation de tension (9) afin de recevoir la tension de fonctionnement du microcontrôleur ; et
- au moins un composant fonctionnel supplémentaire (3.1, 3.2, 3.3), qui est connecté au microcontrôleur (2) et dont le fonctionnement est commandé au moyen du microcontrôleur (2) ;
**caractérisé par** une diode Zener (10), qui est connectée entre un côté d'entrée du dispositif de régulation de tension (9) et une connexion d'alimentation d'au moins un composant fonctionnel supplémentaire (3.1, 3.2, 3.3) de telle sorte que la diode Zener soit connectée d'un côté entre le dispositif de régulation de tension et le redresseur, et soit branché en série dans la direction de blocage avec au moins un composant fonctionnel supplémentaire (3.1, 3.2, 3.3).

2. Transpondeur RFID selon la revendication 1, **caractérisé en ce qu'**il est prévu un autre composant fonctionnel supplémentaire (3.1, 3.2, 3.3), qui est connecté au microcontrôleur (2) et dont le fonctionnement est commandé au moyen du microcontrôleur (2), dans lequel la diode Zener (10) est branchée entre le dispositif de régulation de tension (9) et une connexion d'alimentation de l'autre composant fonctionnel supplémentaire (3.1, 3.2, 3.3) et dans la direction de blocage en série avec l'autre composant fonctionnel supplémentaire (3.1, 3.2, 3.3).

3. Transpondeur RFID selon la revendication 1 ou 2, **caractérisé en ce que** le au moins un composant fonctionnel supplémentaire (3.1, 3.2, 3.3) et/ou l'autre composant fonctionnel supplémentaire (3.1, 3.2, 3.3) sont formés avec un composant du groupe suivant : diode électroluminescente, transducteur sonore, émetteur-récepteur NFC et émetteur-récepteur Bluetooth.

4. Transpondeur RFID selon au moins une des revendications précédentes, **caractérisé en ce que** la diode Zener (10) présente une tension de claquage, qui correspond à au moins une tension de fonctionnement minimale du microcontrôleur (2) moins une tension d'alimentation qui correspond à au moins un composant fonctionnel supplémentaire (3.1, 3.2, 3.3).

5. Support de données portable comportant un transpondeur RFID selon au moins une des revendications précédentes.

6. Support de données portable selon la revendication 5, choisi dans le groupe de supports de données suivant : carte à puce sans contact, document de valeur ou de sécurité tel qu'une pièce d'identité ou document d'identification.
